# EUROPEAN PATENT SPECIFICATION

(11) **EP 0 650 590 B1**
(45) Date of publication and mention of the grant of the patent: **07.05.1997**
(21) Application number: 93919806.5
(22) Date of filing: 24.06.1993
(51) Int. Cl.: G01N 21/03, B01L 3/14

(54) **CUVETTE AND CUVETTE CARTRIDGE FOR A CHEMICAL ANALYZER**
REAKTIONSKüVETTE UND KASSETTE FUER EINEN CHEMISCHEN ANALYSATOR
CUVETTE ET CARTOUCHE DE CUVETTE POUR UN ANALYSEUR CHIMIQUE

(30) Priority: 16.07.1992 US 916040
(43) Date of publication of application: 03.05.1995
(73) Proprietor: SPECTRUM SYSTEMS, INC., Spokane, WA 99206 (US); SCHIAPPARELLI BIOSYSTEMS, INC., Fairfield, New Jersey 07004 (US)
(72) Inventor: KELLN, Norman, Spokane, WA 99212 (US); TIFFANY, Thomas, Spokane, WA 99223 (US); OLSON, Robin, Veradale, WA 99037 (US); WEYRAUCH, Bruce, Otis Orchards, WA 99027 (US)
(74) Representative: Blatchford, William Michael
(86) International application number: PCT/US93/06069
(87) International publication number: WO 94/02833

(56) References cited:
- DE-A- 3 104 796
- GB-A- 1 357 232
- GB-A- 2 049 930
- US-A- 3 718 439

## Description

This disclosure pertains to a cuvette designed for use in a clinical chemistry analyzer for the testing of patient samples, such as blood or urine.

Automated analyzers have been developed for biochemical analysis of patient samples, such as whole blood, serum, urine, plasma and cerebral spinal fluid. Such analyzers carry out tests for assays in defined or random sequences of operations designed for efficient, high volume test procedures. They typically involve use of a reaction turntable that holds mixtures of reagents and samples within receiving cuvettes. Liquid materials are inserted into the cuvettes from a movable pipette. They are mixed and centrifuged for optical analytical test purposes.

Much of such equipment is geared to very high volume test procedures. In such analyzers, the cuvettes are generally multi-compartment elements that partially or completely meet the requirements of a turntable. Many of these cuvettes are reusable.

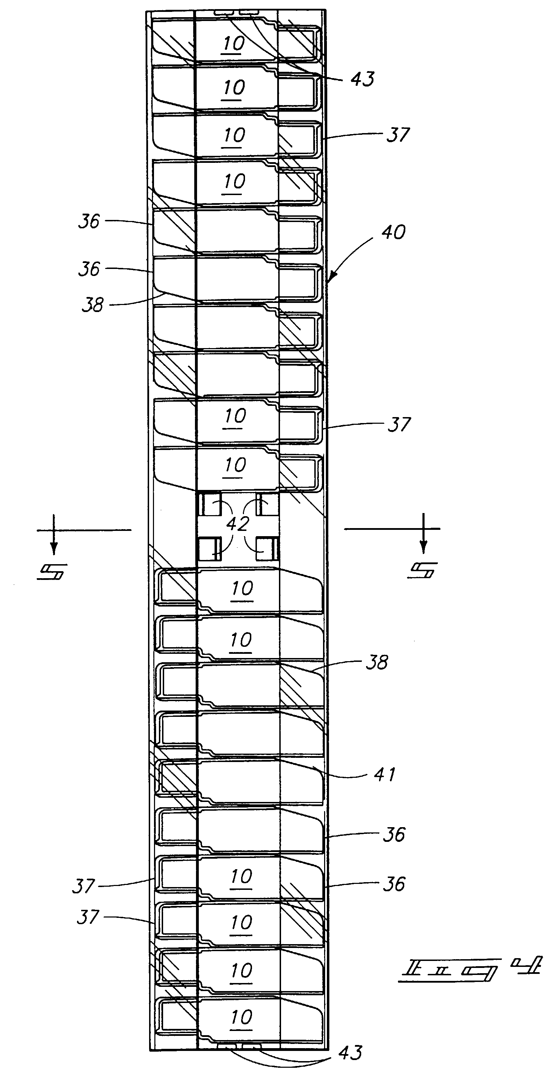

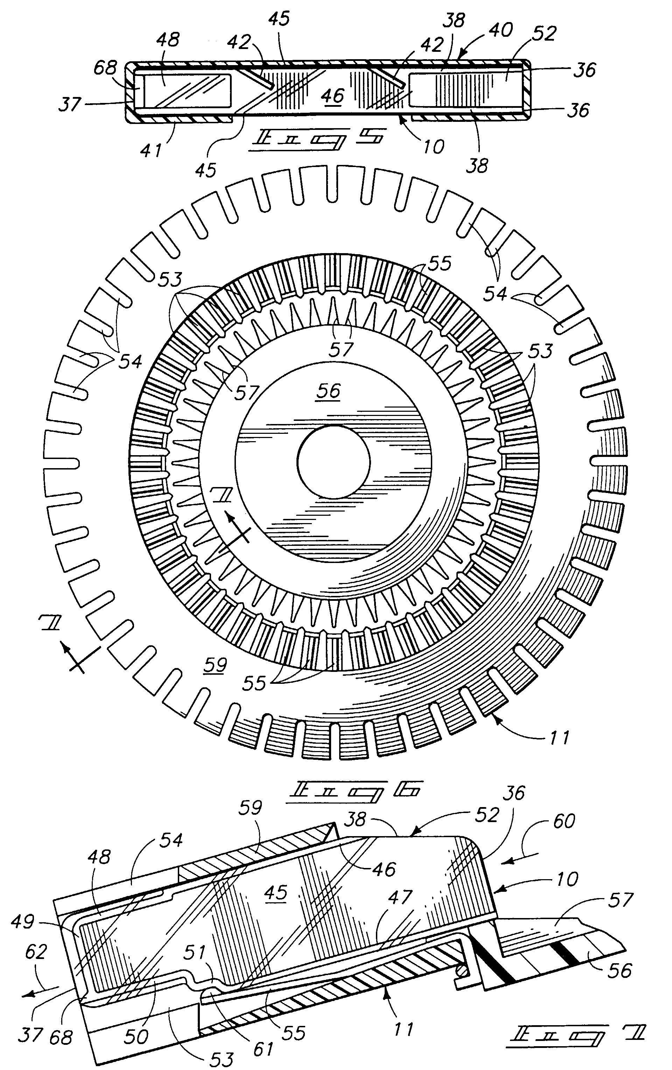

German Patent Application No. DE 31 04796 Al, published on 9 September 1982, discloses multiple cell cuvettes, wherein multiple openings are provided in each cuvette structure for reception of individual chemicals. Fig. 4 shows inclined cuvette cells having optical pathways toward their lower ends.

U.K Patent Application No. GB 2 049 930 A, published on 31 December 1980, discloses a cell or cuvette made as an individual cell having three interconnected chambers for a sample, a reagent, and a mixture for photometric measuring purposes. The three interconnected chambers are at angles to one another to facilitate use of the cuvette in a centrifugal analyzer.

U.S. Patent No. 3,718,439, issued on February 27, 1973, discloses a photometric cuvette assembly including multiple chambers that are inserted within an analyzer for incubation and photometric measurements. The cuvette holds multiple samples and is not designed for centrifugal usage.

Individual cuvettes are also used on such turntables. They have assumed the form of vertical containers similar to cylindrical or rectangular test tubes.

The present invention provides a cuvette as set out in claim 1 hereinafter, and a cuvette package as set out in claim 6.

The invention will now be described by way of example with reference to the drawings in which:-
Fig. 1 is a side elevation view of a cuvette;
Fig. 2 is a top view;
Fig. 3 is a sectional elevation view taken along line 3-3 in Fig. 2;
Fig. 4 is a front elevation view of a loaded cuvette cartridge;
Fig. 5 is a transverse sectional view through a loaded cartridge as seen along line 5-5 in Fig. 4;
Fig. 6 is a plan view of the cuvette turntable; and
Fig. 7 is an enlarged sectional view taken along line 7-7 in Fig. 6.

### Best Modes for Carrying Out the Invention and Disclosure of Invention

The automatic chemical analyzer for which this cuvette was designed includes a turntable 11 rotatably mounted about a vertical axis. A plurality of disposable cuvettes 10 are releasably mounted to the turntable 11. A motor is operably connected to turntable 11 for alternately (1) indexing it at a stationary angular position about its axis with a selected cuvette 10 positioned at a cuvette access station or (2) turning it about its axis while mixing or centrifuging the contents of cuvettes mounted to it.

An analytical means, such as an optical system, is provided adjacent to the turntable 11 for performing tests on the contents of the cuvettes 10 as they rotate about the turntable axis.

The analyzer also includes a vertical probe arm (not shown) movable about a vertical axis. The probe arm supports a downwardly-extending open pipette for movement along an arcuate path intersecting both the cuvette access station and a container access station where reagents and samples are supplied to the open end of the pipette. It can move along the arcuate path in a random fashion to transfer liquid from a container positioned at the container access station to a cuvette 10 positioned on the turntable 11 at the cuvette access station.

The present cuvette is designed for use as a disposable item, each cuvette handling a single mixture of sample and reagent for analytical purposes. The cuvette is designed for use in an angularly inclined position on a complementary turntable, which facilitates insertion of new cuvettes from the center of the turntable and ejection of spent cuvettes from its periphery.

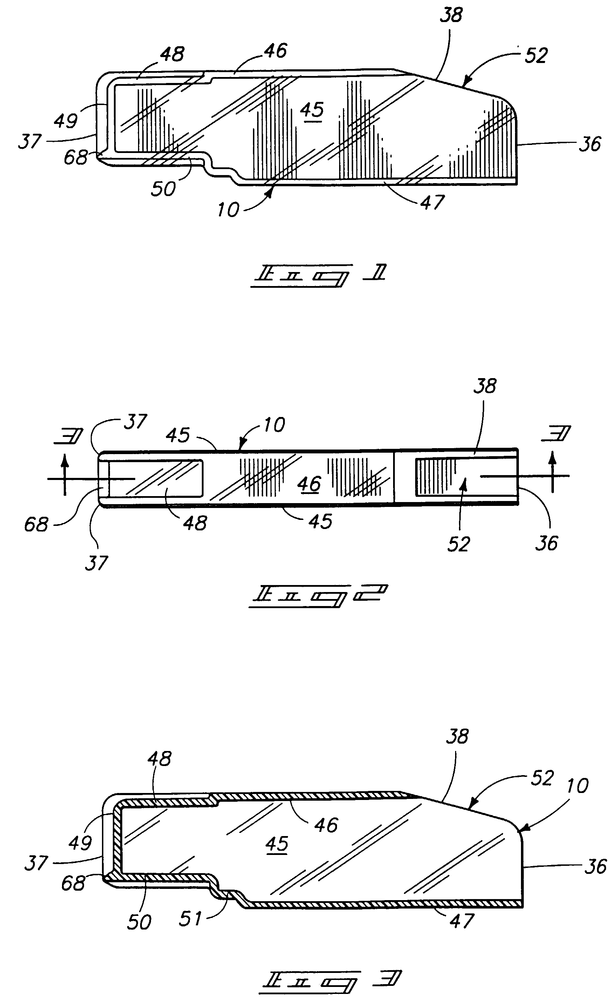

The disposable cuvettes 10 designed for use in turntable 11 are illustrated in detail in Figs. 1-3. A complementary cartridge 40 for handling and storing the cuvettes is shown in Figs. 4 and 5.

Cuvettes 10 are molded from a suitable transparent rigid plastic material that is liquid impervious and inert to the liquids which they are to contain. The cross-sectional configuration of each cuvette is rectangular.

Each cuvette 10 includes two identical side walls 45 having parallel top and bottom edges. The straight top and bottom edges along each side wall 45 longitudinally overlap one another to facilitate stacking of the cuvettes in abutting parallel positions. Side walls 45 are transversely joined along their respective top and bottom edges by parallel spaced top and bottom walls 46 and 47.

The two parallel side walls 45 are arranged in transversely spaced vertical positions extending between opposed ends of the cuvette 10. In addition to the top and bottom edges joined by walls 46 and 47, each side wall 45 has two end edges 36 and 37 arranged across the respective ends of the cuvette 10. The end edges 36 and 37 of each side wall 45 are perpendicular to the top and bottom side wall edges. End edges 36 and 37 can abut one another as successive cuvettes are pushed in end-to-end positions in a direction (arrow 60) parallel to the top and bottom edges. This facilitates insertion of new cuvettes from the center of a turntable and ejection of spent cuvettes from its periphery in a feedthrough arrangement wherein a preceding cuvette is serially pushed from a turntable as a new cuvette takes its place and is installed within the turntable.

One end of each cuvette 10, termed its "upper end", includes an opening 52 between the end edges 36 of the side walls 45. Opening 52 provides access to the interior of cuvette 10 for receipt of liquids. The edges of side walls 45 that form the opening 52 include angular edges 38 intersecting the straight top edges and end edges 36 across the respective side walls 45. The opening (52) extends completely across the one end of the cuvette 10 between the side walls 45 and intersects the top and bottom walls 46, 47.

The angular edges 38 assume substantially horizontal orientations when positioned in turntable 11 (Fig. 7). The end edges 36 along the opening 52 are perpendicular to the top and bottom walls 46 and 47. The openings 52 of cuvettes that are pre-loaded with reagents or other materials before use in the chemistry instrument 24 can optionally be sealed by a suitable film or other cover (not shown) capable of being pierced by the descending tip of pipette 18.

The opposite end of each cuvette 10, termed its "lower end", includes perpendicular optical surfaces for transmission of light in conjunction with operation of the optical system 14. These surfaces include top, end and bottom optical surfaces 48, 49 and 50, respectively. Each optical surface area is slightly recessed inwardly from the outer edges of side walls 45 to protect the optical surfaces from abrasion or contact during handling.

The lower end of each cuvette 10 has a transverse protruding ledge 68 extending across the two side walls 45. Ledge 68 provides a continuous transverse surface for abutment of the upper end of an adjacent cuvette 10 when one cuvette pushes another into position within turntable 11.

A small downwardly-facing recess 51 is provided within the bottom wall 47 of each cuvette 10 next to the inner end of lower optical surface 50. The recess 51 serves as a detent in conjunction with a spring-biased enlargement on a spring member 55 (see Fig. 7) that yieldably holds cuvette 10 within a receiving compartment on the turntable 11.

The cuvettes are preferably packaged within elongated disposable cartridges 40 (see Figs. 4 and 5). The parallel stacked cuvettes 10 face oppositely at the respective ends of cartridge 40. The cartridge 40 is designed for insertion into an open slot of a receiving cuvette magazine (not shown).

The cuvette cartridge 40 is formed from an open-ended C-shaped channel 41 having interior surfaces complementary to the exterior shape and size of the individual cuvettes 10. Channel 41 wraps about and partially encircles a stack of cuvettes 10 in identical parallel positions with the respective top and bottom walls 46, 47 of adjacent cuvettes 10 within the cartridge 40 abutting one another and with their respective end edges 36, 37 aligned along the sides of the stack. Cartridge 40 can be formed from any suitable stiff, resilient plastic sheet or can be extruded in the shape illustrated in Figs. 4 and 5. Its purpose is to facilitate handling and storage of the large quantities of cuvettes 10 required by each chemistry instrument. It expedites manual entry of cuvettes 10 into a storage magazine included within the instrument.

Cuvettes 10 fit transversely within the elongated channel 41 in abutting parallel positions within two groups. Each group of cuvettes 10 at the respective ends of cartridge 40 can be identical to a full stack of cuvettes within the receiving magazine.

Two pairs of inwardly bent stops 42 near the center of cartridge 40 limit inward motion of cuvettes along the length of the magazine in a first direction along its length. Outward movement of cuvettes in an opposite direction along the length of the cartridge 40 is resisted by smaller end stops 43 at each end of the cartridge 40. The stops 43 are bent inwardly to partially intersect the path of cuvettes 10 as they exit the cartridge 40.

Turntable 11 is detailed in Figs. 6 and 7. It includes a circular, radially-slotted wheel adapted to be rotatably mounted about a vertical axis. The outer periphery of the turntable 11 presents a series of equiangularly spaced radial compartments 53. Each compartment 53 individually receives a cuvette 10 in the manner shown in Fig. 7.

Each compartment 53 includes a radial slot having an interior cross-sectional shape and size that complements the exterior cross-sectional shape and size of a cuvette 10. The compartments 53 are arranged about turntable 11 at an angle such that the angular upper edge of each cuvette opening will be oriented horizontally. The angular upper edge is also perpendicular to the turntable axis. The angular nature of each compartment also positions the optical end of each cuvette 10 at a lower elevation than opening 52, assuring that liquids in each cuvette will not spill, even while turntable 11 is stationary.

An axial slot 54 intersects each compartment 53 across its outer end. Slots 54 extend through the upper and lower surfaces of the turntable 11. They provide light access to the optical surfaces 48-50 of cuvettes 10. Slots 54 permit passage of light through the individual cuvettes 10. They are used in conjunction with operation of an optical system (not shown) to facilitate photometric testing of cuvette contents while within the turntable 11.

The cuvettes are yieldably held within the radial compartments 53 by springs 55 (Fig. 7). The outer ends 61 of the longitudinal springs 55 are enlarged to enable them to fit within the recesses 51 formed in the cuvettes 10. The spring ends 61 radially position each cuvette 10 within the respective turntable compartments 53.

Springs 55 also serve as interior supports within compartments 53. They yieldably maintain the top walls 46 of cuvettes 10 in engagement with the upper inside surfaces of the compartments 53. The cover 59 about turntable 11 is fabricated of an electrically conductive plastic material. Springs 55 maintain firm surface-to-surface contact between the top wall 46 of each cuvette 10 and the interior surface of cover 59. This provides effective heat transfer to each cuvette to reduce the time required to warm it in preparation for receipt of a test sample. The cover 59 can be heated as the turntable 11 is rotated, using an adjacent stationary source of controlled heat (not shown).

Cuvettes 10 held within the turntable 11 are individually accessible and remain open for reception of samples and reagents as required by requisitioned assays. Liquids can be introduced through the openings 52 of the respective cuvettes 10 by operation of a movable probe arm and pipette (not shown) at a cuvette access station. All incubation of samples involved in an assay can occur within cuvettes 10 while positioned within turntable 11.

The upper surface of the supporting central plate 56 on turntable 11 has a plurality of tapered radial guide surfaces 57 formed about it. Surfaces 57 are centered between each radial compartment 53 and are obliquely aligned with the respective compartments 53. They are used to index turntable 11 during reception of incoming cuvettes.

As can be seen in Fig. 7, the turntable 11 holds cuvettes 10 in elevationally tilted radial positions within the individual receptacles 53. Their openings 52 of the cuvettes 10 are exposed in the turntable 11 for reception of liquid materials. Their optical surfaces 48, 49 and 50 are exposed through slots 54 at the periphery of turntable 11 for transmission of light as required by operation of the related optical system.

The combination of the angular orientation of the cuvettes 10 within the receptacles 53 of turntable 11 and the provision of the elongated opening 52 across the upper end of each cuvette 10 provides an open access area to the interiors of the installed cuvettes 10 that does not permit splashing of fluids as they are delivered through a vertical pipette. The inclined angular positioning of cuvettes 10 within the individual receptacles 53 in the turntable 11 also prevents splashing or loss of fluids from within the cuvettes 10 during mixing operations that can be carried out by operation of the turntable 11.

Extending the cuvette opening 52 along one side of each cuvette is an improvement specifically adapted to the angular cuvette orientation utilized in the illustrated turntable 11. The inclined angular orientation of the individual cuvettes 10 within the receiving turntable shown in Figs. 6 and 7 allows each cuvette to be installed by pushing it radially outward from the center of the turntable 11 in a "feedthrough" arrangement, as indicated by arrow 60. As a new cuvette 10 takes its place within a selected receptacle of the turntable 11, the preceding cuvette will be serially pushed from the turntable 11, as indicated by arrow 62.

## Claims

1. A cuvette (10) designed for use as a disposable item;
the cuvette (10) being integrally molded from rigid liquid impervious material in a hollow rectangular cross sectional configuration and comprising:
two parallel side walls (45) arranged in transversely spaced vertical positions extending between opposed ends of the cuvette (10), each side wall (45) having top and bottom edges and two end edges (36, 37) arranged across the respective ends of the cuvette (10);
one end of the cuvette (10) having an opening (52);
the remaining end of the cuvette (10) being closed by an end wall formed across the two side walls (45);
a top wall (46) joining the end wall and the respective top edges of the two side walls (45);
a bottom wall (47) joining the end wall and the respective bottom edges of the two side walls (45); and
top and bottom optical surface areas (48, 50) provided at said remaining end of the cuvette for transmission of light during optical testing of cuvette contents;
the cuvette being characterized by:
the cuvette being designed for use in an angularly inclined installed position within a complementary turntable;
the opening (52) being formed by angular edges (38) that intersect the top edges of the respective side walls (45);
the end edges (36, 37) of each side wall (45) being perpendicular to said top and bottom edges, said cuvette ends being for abutting one another as successive cuvettes are pushed in end-to-end positions in a direction (60) parallel to said top and bottom edges to facilitate insertion of new cuvettes from the center of the turntable and ejection of spent cuvettes from its periphery in a feedthrough arrangement wherein a preceding cuvette is serially pushed from the turntable as a new cuvette takes its place and is installed within the turntable;
each cuvette handling a single mixture of sample and reagent for analytical purposes;
said angular edges (38) intersecting said top edges and end edges (36) across said one end of the cuvette (10) to form the elongated opening (52) providing an open access area to the interior of the installed cuvette (10) that does not permit splashing of fluids as they are delivered through a vertical pipette, whereby said angular edges (38) of opening (52) assume substantially horizontal orientations to permit entrance of the tip of a vertical pipette into said one end of the cuvette (10) when the cuvette (10) is positioned within a turntable with said top and bottom edges of the side walls (45) inclined at an angle to the horizontal.

2. The cuvette as claimed in claim 1, further characterized by:
an end optical surface area (49) formed across said end wall at the remaining end of the cuvette;
the top and bottom optical surface areas (48, 50) being perpendicular to the end optical surface area (49).

3. The cuvette as claimed in claims 1 or 2, wherein said end wall at the remaining end of the cuvette (10) is further characterized by:
a transverse outwardly protruding ledge (68) terminating at a location that is flush with the adjacent end edges (37) of the side walls (45).

4. The cuvette as claimed in any of claims 1-3, further characterized by the opening (52) extending completely across said one end of the cuvette (10) between said side walls (45) and intersecting said top and bottom walls (46, 47).

5. The cuvette as claimed in any of claims 1-4, further characterized by:
a detent (51) formed along the bottom wall (47) of the cuvette (10) for yieldably holding the cuvette (10) within a receiving compartment of a turntable.

6. A cuvette package which contains a plurality of the cuvettes as claimed in any of claims 1-5, the cuvette package being further characterized by:
an elongated cartridge (40) facilitating storage, handling and insertion of stacked cuvettes (10) and being for use in a chemical analyzer;
the cartridge (40) being formed from an open-ended C-shaped channel (41) which is dimensioned to house a stack of cuvettes (10) arranged in identical parallel positions with the respective top and bottom walls (46, 47) of adjacent cuvettes (10) abutting one another and with their respective end edges (36, 37) aligned along the length of the stack side;
first inwardly bent stop means (42) located within the cartridge (40) in engagement with one end of a stack of cuvettes (10) for limiting motion of the stack of cuvettes (10) in a first direction along the length of the cartridge (40); and
second inwardly bent stop means (43) located within the cartridge (40) adjacent to one end thereof, the second inwardly bent stop means (43) being in engagement with the remaining end of a stack of cuvettes (10) for resisting motion of the stack of cuvettes (10) in an opposite direction along the length of the cartridge (40).

7. The cuvette package of claim 6 wherein the cartridge (40) is additionally characterized by being double-ended and holding two stacks of cuvettes (10) that face oppositely at its respective ends;
the first inwardly bent stop means (42) being located near the center of the cartridge (40);
the second inwardly bent stop means (43) being located adjacent to each end of the cartridge (40).

## Patentansprüche

1. Eine Kuvette (10) für einmaligen Gebrauch; die Kuvette (10) ist einstückig hergestellt aus starrem, flüssikeitsundurchlässigem Material in einer hohlen, rechteckigen Querschnittskonfiguration und umfasst:
zwei vertikale, voneinander beabstandete Seitenwände (45), die sich zwischen gegenüberliegenden Enden der Kuvette (10) erstrecken, jede Seitenwand (45) hat obere und untere Kanten und zwei Endkanten oder Stirnwände (36, 37) an den Enden der Kuvette (10);
ein Ende der Kuvette (10) hat eine öffnung (52);
das andere Ende der Kuvette (10) ist geschlossen durch eine Endwand, die sich zwischen den Seitenwänden (45) erstreckt;
eine obere Wand (46) erstreckt sich zwischen der Stirnwand und den oberen Kanten der beiden Seitenwände (45);
eine untere Wand (47) erstreckt sich zwischen der Stirnwand und den unteren Kanten der Seitenwände (45); und
obere und untere optische Oberflächen-Bereiche (48, 50) sind an dem anderen Endbereich der Kuvette vorgesehen, zum Durchtritt von Licht während optischer Tests des Kuvetten-Inhalts;
die Kuvette ist gekennzeichnet durch:
die Kuvette ist ausgebildet zur Verwendung in einer im Winkel geneigten Arbeitsstellung innerhalb eines komplementären Drehtisches;
die Öffnung (52) ist geformt oder gebildet durch winkelige bzw. im Winkel geneigte Kanten (38), welche die oberen Kanten der entsprechenden Seitenwände (45) schneiden;
die Stirnkanten oder Stirnseiten (36, 37) jeder Seitenwand (45) sind senkrecht gegenüber den oberen und unteren Kanten, die besagten Kuvettenenden sind vorgesehen zum gegenseitigen aneinander Anliegen, wenn aufeinanderfolgende Kuvetten Ende an Ende in einer Richtung (60) parallel zu den besagten oberen und unteren Kanten eingestossen bzw. eingeschoben werden, zur Erleichterung der Eingabe neuer Kuvetten vom Zentrum des Drehtisches her und Ausstoss verbrauchter Kuvetten von der Peripherie in einer Durchschub-Beschickungs-Anordnung, wobei eine vorhergehende Kuvette in Serie ausgestossen wird von dem Drehtisch, wenn eine neue Kuvette ihren Platz einnimmt und in den Drehtisch eingesetzt wird;
jede Kuvette behandelt eine einzige Mischung aus Probesubstanz und Reagenz für analytische Zwecke;
die besagten geneigten Kanten (38), die sich schneiden mit den oberen Kanten und den Stirnkanten (36) quer über das eine Ende der Kuvette (10) zur Bildung der länglichen Öffnung (52), die eine offene Zugangsfläche zu dem Inneren der installierten Kuvette (10) bildet, welche keinerlei Verschüttung von Flüssigkeit erlaubt, wenn sie (die Flüssigkeit) eingegeben wird durch eine vertikale Pipette, wobei die geneigten Kannten (38) der oberen Kanten (52) eine im wesentlichen horizontale Orientierung einnehmen, um den Eintritt des Endes einer vertikalen Pipette in dieses besagte Ende der Kuvette (10) zu gestatten, wenn die Kuvette (10) positioniert ist innerhalb des Drehtisches mit den besagten oberen und unteren Kanten der Seitenwände (45), geneigt mit einem Winkel gegenüber der Horizontalen.

2. Die Kuvette nach Anspruch 1, weiter gekennzeichnet durch: ein optischer Oberflächenbereich (49) ist gebildet quer über das anderen Ende (am Drehtisch radial aussen) der Kuvette; die oberen und unteren optischen Oberflächenbereiche (48, 50) sind rechtwinkelig gegenüber der optischen Oberfläche (49) an der Stirnfläche.

3. Die Kuvette nach Anspruch 1 oder zwei, wobei die Stirnwand an dem verbleibenden Ende der Kuvette weiter gekennzeichnet ist durch:
eine quer nach aussen vorstehende Leiste oder Schräge (68), die an einem Ort endet, der bündig ist mit benachbarten Endkanten (37) der Seitenwände (45).

4. Die Kuvette nach einem der Ansprüche 1 bis 3, weiter dadurch gekennzeichnet, dass sich die Öffnung (52) völlig über das eine Ende der Kuvette (10) zwischen den Seitenwänden (45) erstreckt und die oberen und unteren Seitenwände (46, 47) schneidet.

5. Die Kuvette nach einem der Ansprüche 1 bis 4, weiter gekennzeichnet durch:
eine Arretierungsmarke oder -stute (51) ist gebildet an der Bodenwand (47) der Kuvette (10) zur nachgiebigen Halterung der Kuvette (10) in einem Aufnahmeabteil eines Drehtisches.

6. Eine Kuvettenpackung, welche eine Vielzahl von Kuvetten nach Ansprüchen 1 bis 5 enthält, die Kuvettenpackung ist weiter gekennzeichnet durch:
eine langgestreckete Kartusche (40), welche die Aufbewahrung, Handhabung Rind Eingabe übereinander gestapelter Kuvetten (10) erleichtert und zur Verwendung in einem chemischen Analysegerät vorgeschen ist;
die Kartusche (40) ist gebildet aus einem offen endenden, C-förmigen Kanal (41), der dimensioniert ist zur Aufnahme eines Stapels von Kuvetten (10), die angeordnet sind in parallelen Positionen mit entsprechenden oberen und unteren Wänden (46, 47) benachbarter Kuvetten (10) aneinander anstossend oder anliegend, und mit ihren entsprechenden Stirnkanten (36, 37), ausgerichtet längs der Länge des Stapels;
erste, nach innen weisende Anschlagmittel (42) innerhalb der Kartusche (40) zum Angritt an einem Ende eines Stapels von Kuvetten (10) zur Begrenzung der Bewegung des Stapels von Kuvetten (10) in einer ersten Richtung längs der Länge der Kartusche (40); und
zweite, nach innen weisende Anschlagmittel (43) innerhalb der Kartusche (40), benachbart einem ihrer Enden, die zweiten, nach innen gebogenen Anschlagmittel (43) wirken zusammen mit dem anderen Ende des Kuvettenstapels (10) für einen Bewegungswiderstand des Stapels von Kuvetten (10) in entgegengesetzer Richtung längs der Länge der Kartusche (40).

7. Die Kuvettenpackung nach Anspruch 6, wobei die Kartusche (40) zusätzlich gekennzeichnet ist dadurch, dass die Kartusche (40) beidseitig, also mit zwei Durchschubenden, ausgebildet ist und zwei Stapel von Kuvetten (10) enthält, die einander gegenüberliegen:
die ersten, nach innen gebogenen Anschlagmittel (42) sind lokalisiert nahe der Mitte der Kartusche (40);
die zweiten, nach innen gebogenen Anschlagmittel (43) sind lokalisiert nahe dem Ende der Kartusche (40).

## Revendications

1. Cuvette (10) conçue pour être utilisée comme objet jetable ;
la cuvette (10) étant moulée d'une seule pièce en un matériau rigide imperméable aux liquides en présentant une forme creuse et rectangulaire en section transversale, et comprenant :
deux parois latérales parallèles (45) disposées dans des positions verticales écartées transversalement en s'étendant entre des extrémités opposées de la cuvette (10), chaque paroi latérale (45) présentant des bords supérieur et inférieur et deux bords d'extrémité (36,37) disposés transversalement aux extrémités respectives de la cuvette (10),
une première extrémité de la cuvette (10) présentant une ouverture (52),
l'autre extrémité de la cuvette (10) étant fermée par une paroi d'extrémité formée transversalement aux deux parois latérales (45),
une paroi supérieure (46) joignant la paroi d'extrémité et les bords supérieurs respectifs des deux parois latérales (45),
une paroi inférieure (47) joignant la paroi d'extrémité et les bords inférieurs respectifs des deux parois latérales (45), et
des zones de surface optique supérieure et inférieure (48,50) prévues à la dite autre extrémité de la cuvette pour assurer une transmission de lumière pendant un essai optique du contenu de la cuvette,
la cuvette étant caractérisée en ce que :
la cuvette est conçue pour être utilisée dans une position angulairement inclinée à l'intérieur d'une plaque tournante complémentaire,
l'ouverture (52) est formée par des bords angulaires (38) qui coupent les bords supérieurs des parois latérales respectives (45),
les bords d'extrémité (36,37) de chaque paroi latérale (45) sont perpendiculaires aux dits bords supérieur et inférieur, les dîtes extrémités de cuvette venant en contact les unes avec les autres lorsque des cuvettes successives sont poussées dans des positions bout à bout dans une direction (60) parallèle aux dits bords supérieurs et inférieurs pour faciliter l'introduction de nouvelles cuvettes à partir du centre de la plaque tournante et l'éjection des cuvettes utilisées depuis sa périphérie dans une disposition d'alimentation continue où une cuvette précédente est poussée depuis la plaque tournante lorsqu'une nouvelle cuvette prend sa place en étant installée à l'intérieur de la plaque tournante,
chaque cuvette contenant un mélange unique d'échantillon et de réactif à des fins d'analyse,
les dits bords angulaires (38) coupant les dits bords supérieurs et bords d'extrémité (36) transversalement à la dite première extrémité de la cuvette (10) pour former l'ouverture oblongue (52) qui fournit une zone d'accès ouverte vers l'intérieur de la cuvette installée (10) ce qui ne permet pas des éclaboussures de fluides lorsque ceux-ci sont délivrés au moyen d'une pipette verticale, de sorte que les dits bords angulaires (38) de l'ouverture (52) présentent sensiblement des orientations horizontales pour permettre l'entrée du sommet d'une pipette verticale dans la dite première extrémité de la cuvette (10) quand la cuvette (10) est placée à l'intérieur d'une plaque tournante avec les dits bords supérieur et inférieur de ses parois latérales (45) inclinés d'un certain angle par rapport à l'horizontale.

2. Cuvette selon la revendication 1, caractérisée de plus :
par une zone de surface optique d'extrémité (49) formée transversalement à la dite paroi d'extrémité à l'autre extrémité de la cuvette,
les zones de surface optique supérieure et inférieure (48,50) étant perpendiculaires à la zone de surface optique d'extrémité (49).

3. Cuvette selon la revendication 1 ou 2, dans laquelle la dite paroi d'extrémité à l'autre extrémité de la cuvette (10) est caractérisée de plus par un rebord transversal (68) faisant saillie vers l'extérieur qui se termine en un endroit qui est de niveau avec les bords d'extrémité adjacents (37) des parois latérales (45).

4. Cuvette selon l'une quelconque des revendications 1 à 3, caractérisée de plus par le fait que l'ouverture (52) s'étend complètement transversalement à la dite première extrémité de la cuvette (10) entre les dites parois latérales (45) et coupe les dites parois supérieure et inférieure (46, 47).

5. Cuvette selon l'une quelconque des revendications 1 à 4, caractérisée de plus par un ergot (51) formé le long de la paroi inférieure (47) de la cuvette (10) pour maintenir élastiquement la cuvette (10) à l'intérieur d'un compartiment récepteur d'une plaque tournante.

6. Un ensemble de cuvettes contenant plusieurs cuvettes selon l'une quelconque des revendications 1 à 5, l'ensemble de cuvettes étant de plus caractérisé :
par une cartouche allongée (40) qui facilite l'emmagasinage, la manutention et l'introduction des cuvettes empilées (10) et qui est conçue pour être utilisée dans un analyseur chimique,
la cartouche (40) étant formée à partir d'un canal (41) en forme de C à extrémités ouvertes qui est dimensionné pour recevoir un empilage de cuvettes (10) disposées dans des positions parallèles identiques, les parois supérieures et inférieures respectives (46,47) des cuvettes adjacentes (10) venant en contact les unes avec les autres et leurs bords d'extrémité respectifs (36,37) étant alignés selon la longueur du côté de l'empilage,
un premier moyen d'arrêt (42) recourbé vers l'intérieur disposé à l'intérieur de la cartouche (40) en engageant une extrémité d'une pile de cuvettes (10) pour limiter le déplacement de la pile de cuvettes (10) dans une première direction selon la longueur de la cartouche (40), et
un second moyen d'arrêt (43) recourbé vers l'intérieur disposé à l'intérieur de la cartouche (40) en étant adjacent à l'une des extrémités de celle-ci, le second moyen d'arrêt (43) recourbé vers l'intérieur engageant l'autre extrémité de la pile de cuvettes (10) pour résister au déplacement de la pile de cuvettes (10) dans une direction opposée selon la longueur de la cartouche (40).

7. Ensemble de cuvettes selon la revendication 6, dans lequel la cartouche (40) se caractérise de plus en ce qu'elle est à extrémité double et porte deux piles de cuvettes (10) qui sont disposées en regard de façon inversée à ses extrémités respectives,
le premier moyen d'arrêt (42) recourbé vers l'intérieur étant disposé près du centre de la cartouche (40),
le second moyen d'arrêt (43) recourbé vers l'intérieur étant disposé de façon adjacente à chaque extrémité de la cartouche (40).
